# EUROPÄISCHE PATENTSCHRIFT

(11) **EP 4 320 363 B1**
(45) Veröffentlichungstag und Bekanntmachung des Hinweises auf die Patenterteilung: **26.03.2025**
(21) Anmeldenummer: 22720423.7
(22) Anmeldetag: 04.04.2022
(51) Int. Cl.: F16C 19/52, F16C 33/34, F16C 41/00, F16C 43/04

(54) **WÄLZKÖRPER MIT MESSVORRICHTUNG**
ROLLING BODY WITH MEASURING DEVICE
CORPS DE ROULEMENT ÉQUIPÉ D'UN DISPOSITIF DE MESURE

(30) Priorität: 08.04.2021 DE 102021203477; 08.04.2021 BE 202105273
(43) Veröffentlichungstag der Anmeldung: 14.02.2024
(73) Patentinhaber: thyssenkrupp rothe erde Germany GmbH, 44137 Dortmund (DE); thyssenkrupp AG, 45143 Essen (DE)
(72) Erfinder: ELFERT, Gunther, 59597 Erwitte (DE); LÜNEBURG, Bernd, 45481 Mülheim (DE); ROLLMANN, Jörg, 59558 Lippstadt (DE)
(74) Vertreter: thyssenkrupp Intellectual Property GmbH
(86) Internationale Anmeldenummer: PCT/EP2022/058825
(87) Internationale Veröffentlichungsnummer: WO 2022/214412

(56) Entgegenhaltungen:
- WO-A1-2020/064504
- DE-A1- 102016 116 118
- DE-A1- 102017 210 286
- DE-A1- 102018 200 048

## Beschreibung

### Stand der Technik

Die Erfindung betrifft einen Wälzkörper mit einer Messvorrichtung zur Verwendung in einem Wälzlager nach dem Oberbegriff des Anspruchs 1.

Ein Wälzkörper mit einem Sensor zur Verwendung in einem Wälzlager ist aus WO 2020/064504 A1 bekannt. Der Wälzkörper weist einen Außenmantel und eine Bohrung auf, die entlang der Mittelachse des Wälzkörpers vorgesehen ist. In der Bohrung ist ein induktiv messender Sensor zur Belastungsmessung auf einer Platine angeordnet. Der Sensor weist einen an der Bohrungswandung angeordneten Messkontakt mit einer der Platine zugewandten Messfläche auf. An der dem Messkontakt abgewandten Seite der Platine ist ein die Bohrungswand berührender Abstandshalter angeordnet, der an der Platine fixiert ist. Abstandshalter und Messkontakt sind mittels Magneten an der Bohrungswand fixiert. Nachteilig an dem bekannten Wälzkörper ist, dass der Sensor und die übrigen auf der Platine angeordneten Elektronikbauteile während der Montage des Sensors in dem Wälzkörper gegenüber mechanischer Belastung und/oder Verschmutzung ungeschützt sind und die axiale Positionierung von Abstandshalter und Messkontakt in der Bohrung aufwändig ist.

DE 10 2017 210 286 A1 beschreibt einen Sensorwälzkörper, dessen Messvorrichtung in einem starren Gehäuse angebracht ist. Das Gehäuse ermöglicht eine genaue Positionierung der als Messvorrichtung dienenden Kragbalken in der Bohrung. Dazu ist ein starrer Anbringungsabschnitt der Kragbalken an dem Gehäuse beispielsweise durch Bolzen fixiert. Nachteilig ist, dass die genaue Positionierung der Messvorrichtung durch das Gehäuse mindestens zwei einander gegenüberliegende Sensoren für eine Erfassung der Gesamtverformung der Bohrung erforderlich macht. Neben dem erhöhten Bauteilaufwand ist dies mit einem geringeren Signal-Rausch-Verhältnis bei der Messung der Verformung verbunden.

Aus DE 2018 200 048 A1 ist eine Rolle mit integrierter Lastdetektion bekannt, deren Sensormodul mit einem oder mehreren Deformationssensoren ausgestattet ist und ein starres Gehäuse aufweist. Die Deformationssensoren sind mit einem Wandabstandssensor ausgebildet, der an der äußeren zylindrischen Fläche des Gehäuses angeordnet ist, so dass ein detektierendes Element des Wandabstandssensors einer inneren radialen Fläche der Rollenbohrung gegenüberliegt, und einen radialen Spalt dazwischen misst, wobei der radiale Spalt eine Anzeige für eine Bohrungsdeformation ist. Nachteilig ist, dass die Sensoren bei der Montage ungeschützt auf der Außenseite des Gehäuses angeordnet sind und auch hier zwei Sensoren auf gegenüberliegenden Seiten des Gehäuses benötigt werden, um die Gesamtverformung der Bohrung zu bestimmen.

### Offenbarung der Erfindung

Aufgabe der Erfindung ist es daher, einen Wälzkörper mit einer Messvorrichtung zur Verwendung in einem Wälzlager anzugeben, der zugleich eine hohe Messgenauigkeit und eine einfache und sichere Montage der Messvorrichtung ermöglicht.

Diese Aufgabe wird gelöst durch einen Wälzkörper zur Verwendung in einem Wälzlager mit den Merkmalen des Anspruchs 1.

Hierdurch wird ein Wälzkörper zur Verwendung in einem Wälzlager mit einer Mittelachse, einem zu der Mittelachse rotationssymmetrischen Außenmantel, zwei Stirnseiten und einer die beiden Stirnseiten verbindenden, sich entlang der Mittelachse erstreckenden Bohrung angegeben. In der Bohrung ist eine Leiterplatte mit einer Messvorrichtung zur Messung einer Verformung der Bohrung aufgenommen. Die Leiterplatte ist von mindestens einem auf einer ersten Seite der Leiterplatte befestigten Stützelement getragen, das mit der Bohrungswand in Kontakt steht. Auf einer gegenüberliegenden zweiten Seite der Leiterplatte ist mindestens ein Messelement vorgesehen, das ebenfalls mit der Bohrungswand in Kontakt steht und einen Messspalt zwischen dem Messelement und der Leiterplatte erzeugt, dessen Höhe ein Maß für die Verformung der Bohrung bildet. Erfindungsgemäß ist vorgesehen, dass die Leiterplatte mit der Messvorrichtung, das mindestens eine Stützelement und das mindestens eine Messelement von einem in der Bohrung angeordneten starren Gehäuse aufgenommen sind. Das mindestens eine Stützelement und das mindestens eine Messelement stehen dabei durch Öffnungen in dem Gehäuse mit der Bohrungswand in Kontakt und die Leiterplatte ist in dem Gehäuse schwimmend gelagert.

Durch die erfindungsgemäße Lagerung der Leiterplatte mit dem mindestens einen daran fixierten Stützelement in dem Gehäuse wird zum einen ein Sensormodul geschaffen, bei dem die Elektronik der Messvorrichtung vor und während der Montage geschützt ist und welches sich in einfacher Weise in axialer Richtung in die Bohrung des Wälzkörpers einschieben lässt. Zum anderen wird durch die schwimmende Lagerung der Leiterplatte eine zuverlässige Positionierung der Leiterplatte über das mindestens eine Stützelement an der Bohrungswand sichergestellt. Insbesondere sind mögliche Eigenbewegungen des Gehäuses von der Leiterplatte entkoppelt. Dadurch wird eine Beeinflussung des Messergebnisses durch Bewegungen des Gehäuses verhindert. Ferner erlaubt es die Positionierung der Leiterplatte an der Bohrungswand, die gesamte Verformung der Bohrung in einem einzelnen Messspalt zu ermitteln, wodurch ein besonders gutes Signal-Rausch-Verhältnis bei der Messung erreicht werden kann.

Bevorzugt weist der Wälzkörper die gleiche Anzahl an Stützelementen und Messelementen auf. Besonders bevorzugt sind jeweils 2 bis 5 Stütz- und Messelemente vorgesehen.

Bevorzugt stehen das mindestens eine Stützelement und das mindestens eine Messelement mit der Bohrungswand aufgrund von magnetischer Wechselwirkung in Kontakt. Dazu können die Stützelemente und/oder die Messelemente einen Permanentmagneten umfassen.

In bevorzugten Ausführungsformen kann das Gehäuse innenseitig sich gegenüberliegende Führungsnuten aufweisen, in die die Leiterplatte in axialer Richtung eingeschoben ist. Dabei können die Führungsnuten eine Nutbreite aufweisen, die die Höhe der Leiterplatte unter Ausbildung eines Spiels übersteigt. Die Führungsnuten erlauben eine einfache Montage der Leiterplatte im Gehäuse und begrenzen zugleich die Bewegbarkeit der Leiterplatte im eingebauten Zustand. Das Spiel ist vorzugsweise größer gewählt, als die unter Belastung des Wälzlagers maximal zu erwartenden Verformungen der Bohrung. Besonders bevorzugt beträgt das Spiel der Leiterplatte in den Führungsnuten zwischen 0,1 mm und 2 mm, insbesondere zwischen 0,2 mm und 1,5 mm.

Vorzugsweise weist das Gehäuse die Grundform einer allgemein zylindrischen Hülse auf und die Öffnungen zur Aufnahme des mindestens einen Stützelements und des mindestens einen Messelements sind durch fensterartige Ausschnitte gebildet. Der Außendurchmesser des Gehäuses ist vorzugsweise geringer gewählt als der Innendurchmesser der Bohrung, so dass das Gehäuse durch einen radialen Ringspalt von der Bohrungswand beabstandet ist. Die fensterartigen Ausschnitte sind bevorzugt dem Umriss der Stütz- und Messelemente angepasst. Dadurch werden die vom Gehäuse aufgenommenen Komponenten besonders wirksam vor Verschmutzungen und/oder mechanischen Beeinträchtigungen während der Montage geschützt.

Vorzugsweise sind die Öffnungen für das mindestens eine Stützelement und ein diesem Stützelement zugeordneten Messelement in dem Gehäuse sich diametral gegenüberliegend angeordnet. Dadurch werden die Verformungen der Bohrungswand über die Stützelemente unmittelbar im Bereich der Messvorrichtung auf die Leiterplatte übertragen. Auf diese Weise wird eine direkte, der axialen Position der Messvorrichtung zuordenbare radial aufgelöste Verformungsmessung der Bohrung erreicht.

In bevorzugten Ausführungsformen nehmen die Öffnungen einen Zentrumswinkel von jeweils mindestens 90°, bevorzugt mindestens 120° in Umfangsrichtung des Gehäuses ein. Öffnungen mit einem großen Zentrumswinkel erlauben den Einsatz von entsprechend großen Stütz- und Messelementen. Es ist vorteilhaft, wenn die Stütz- und Messelemente über einen großen Zentrumswinkel an der Bohrungswand anliegen, um so die Leiterplatte stabil zu positionieren und eine große Messfläche im Bereich des Messspalts bereitzustellen. Die Messgenauigkeit kann damit weiter gesteigert werden.

Bevorzugt ist die Leiterplatte in dem starren Gehäuse in Richtung der Mittelachse um eine Weglänge verschiebbar angeordnet, die größer ist als ein axiales Spiel des mindestens einen Stützelements und/oder des mindestens einen Messelements in der jeweils zugeordneten Öffnung. Bei einer solchen Ausgestaltung ist vorteilhaft, dass beim Einschieben des Gehäuses während der Montage Kräfte über das Gehäuse auf die Stütz- und Messelemente übertragen werden können, um die Stütz- und Messelemente in der Bohrung zu positionieren. Durch die größere axiale Verschiebbarkeit der Leiterplatte im Gehäuse werden mechanische Belastungen der Leiterplatte bei der Montage vermieden. Die Leiterplatte wird bevorzugt über die vom Gehäuse verursachte Verschiebung der Stützelemente in der Bohrung positioniert.

Vorzugsweise ist das Gehäuse stirnseitig mit einem scheibenförmigen Abschlusselement verbunden. Das scheibenförmige Abschlusselement weist einen größeren Durchmesser als die Bohrung auf. Dadurch bildet das Abschlusselement einen axialen Anschlag für das Gehäuse in der Bohrung. Bevorzugt sind das Gehäuse und das Abschlusselement zweistückig ausgebildet. Insbesondere ist es bevorzugt, wenn das Abschlusselement auf ein am Gehäuse ausgebildetes Gewinde aufgeschraubt ist. In diesem Fall lassen sich Längentoleranzen zwischen den Längen des Gehäuses und des Wälzkörpers auf einfache Weise ausgleichen. Denkbar ist aber auch eine einstückige Ausbildung von Gehäuse und Abschlusselement, beispielsweise bei einer Realisierung mittel 3D-Druck.

Das scheibenförmige Abschlusselement kann als ein Generatorpolschuh ausgebildet sein. Dafür kann das scheibenförmige Abschlusselement außenseitig eine Mehrzahl von auf einer Kreisbahn verteilt angeordneten Spulenaufnahmen aufweisen.

Bevorzugt ist das Abschlusselement zur Verdrehsicherung mit der dem Abschlusselement zugeordneten Stirnseite formschlüssig und/oder stoffschlüssig verbunden. Beispielsweise kann das Abschlusselement mit der Stirnseite verstiftet und/oder verklebt sein.

Vorzugsweise ist das Gehäuse durch stirnseitige Verschraubung mit einem Deckel axial in der Bohrung verspannbar. Das Gehäuse ist dann bevorzugt unter Ausbildung eines radialen Ringspaltes in der Bohrung aufgenommen und steht nur vermittels des Deckels und/oder des Generatorpolschuhs mit den Stirnseiten des Wälzkörpers in Kontakt. Die Verschraubung kann ist mit einer Schraubensicherung versehen sein.

Weitere vorteilhafte Ausführungsformen sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

### Kurzbeschreibung der Zeichnungen

- Fig. 1A: zeigt schematisch ein erstes Ausführungsbeispiel des erfindungsgemäßen Wälzkörpers in einer perspektivischen, teilweise geschnittenen Darstellung, mit zwei Stütz- und zwei Messelementen,
- Fig. 1B: zeigt schematisch den Wälzkörper gemäß Fig. 1A in einer Explosionszeichnung,
- Fig. 2A: zeigt schematisch das mittels eines Generatorpolschuhs und eines Deckels beidseitig verschlossene Gehäuse des Wälzkörpers gemäß Fig. 1A und 1B mit darin eingesetzten Stütz- und Messelementen in einer perspektivischen Darstellung,
- Fig. 2B: zeigt schematisch das Gehäuse gemäß Fig. 2A in einer Explosionszeichnung,
- Fig. 3: zeigt schematisch das Gehäuse gemäß der Fig. 1A bis 2B als separates Bauteil in einer perspektivischen Darstellung,
- Fig. 4: zeigt schematisch ein Gehäuse mit jeweils drei Öffnungen für Stütz- und Messelemente gemäß einem zweiten Ausführungsbeispiel der Erfindung in einer perspektivischen Darstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

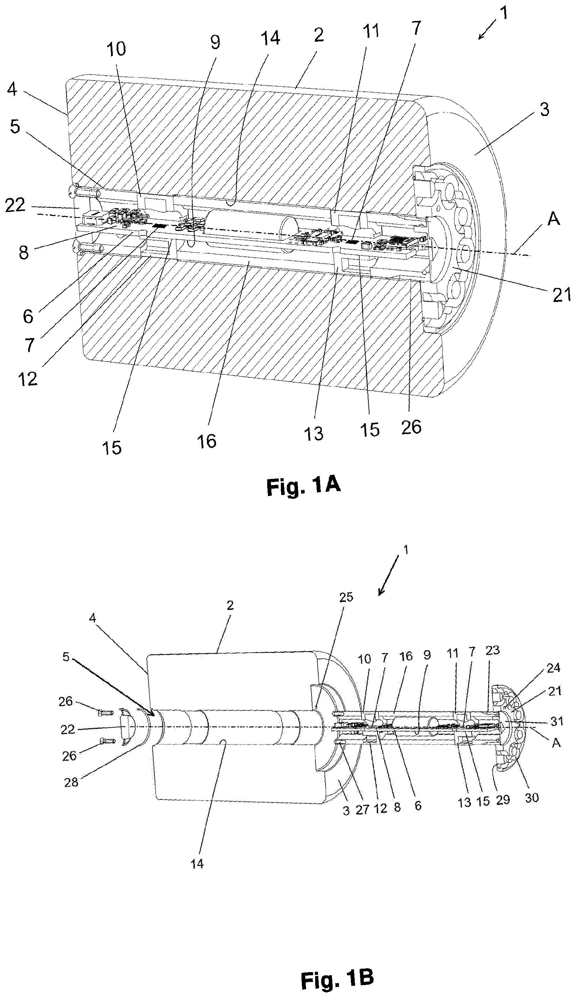

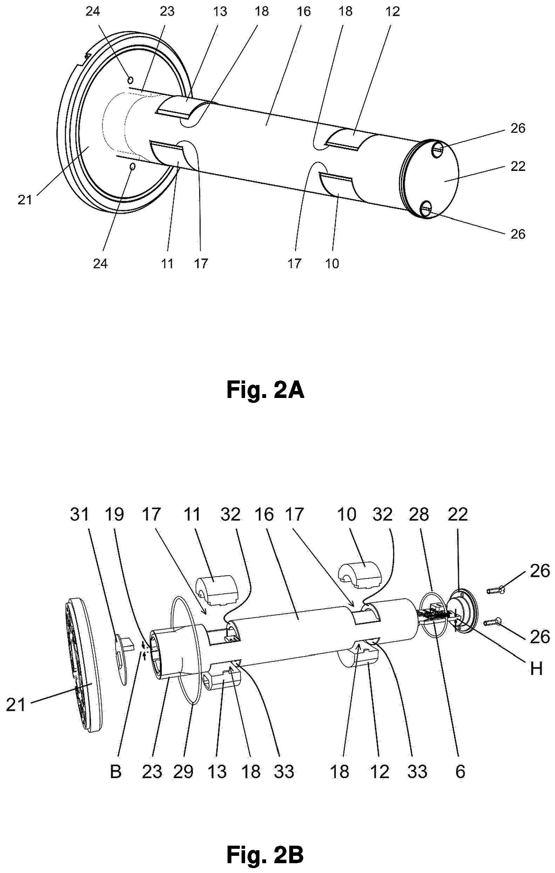

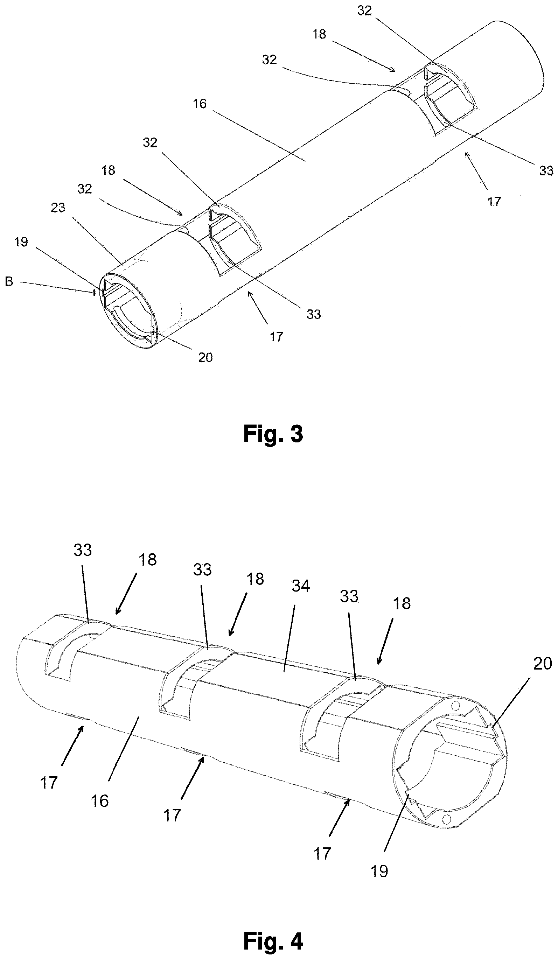

In Fig. 1A und 1B ist ein erstes Ausführungsbeispiel des erfindungsgemäßen Wälzkörpers 1 zur Verwendung in einem Wälzlager in einer perspektivischen, teilweise geschnittenen Darstellung gezeigt. Die in Fig. 1B gezeigte Explosionsdarstellung erlaubt ein vereinfachtes Verständnis des Montageprozesses der Messeinrichtung im Wälzkörper 1. Die Fig. 2A, 2B und 3 zeigen weitere Details des Aufbaus des Wälzkörpers gemäß dem ersten Ausführungsbeispiel.

Wie in **Fig. 1A und 1B** dargestellt weist der Wälzkörper 1 eine Mittelachse A, einen zu der Mittelachse A rotationssymmetrischen Außenmantel 2, zwei Stirnseiten 3, 4 und eine die beiden Stirnseiten 3, 4 verbindende, sich entlang der Mittelachse A erstreckende Bohrung 5 auf. Der Außenmantel 2 des Wälzkörpers 1 weist somit eine allgemeine Rollenform auf und kann insbesondere die Form einer Zylinder-, Kegel-, Tonnen- oder Nadelrolle haben.

In der Bohrung 5 ist eine Leiterplatte 6 mit einer Messvorrichtung 7 zur Messung einer Verformung der Bohrung 5 aufgenommen. Die Leiterplatte 6 ist in dem dargestellten Ausführungsbeispiel von zwei auf einer ersten Seite 8 der Leiterplatte 6 befestigten Stützelementen 10, 11 getragen. Die Stützelemente 10, 11 stehen mit der Bohrungswand 14 in Kontakt. Die Stützelemente 10, 11 positionieren dadurch die Leiterplatte 6 gegenüber der Bohrungswand 14. Die Stützelemente 10, 11 können an der Leiterplatte 6 beispielsweise durch Verkleben oder Verschrauben fixiert sein.

Auf einer gegenüberliegenden zweiten Seite 9 der Leiterplatte 6 sind im dargestellten Ausführungsbeispiel zwei Messelemente 12, 13 vorgesehen, die ebenfalls mit der Bohrungswand 14 in Kontakt stehen und jeweils einen Messspalt 15 zwischen dem Messelement 12, 13 und der Leiterplatte 6 erzeugen. Die Höhe des Messspaltes 15 ist ein Maß für die Verformung der Bohrung 5. Die Höhe des Messspaltes 15 sollte ausreichend gering sein, um eine hohe Messgenauigkeit sicherzustellen, darf aber nicht zu gering gewählt sein, um eine Spielüberbrückung unter Lastdeformation zu vermeiden. Die erwartbaren Verformungen der Bohrung 5 und damit die Höhe des Messspaltes 15 im unbelasteten Zustand liegen in der Größenordnung von mehreren 10 µm.

Die Messelemente 12, 13 sind vorzugsweise im Querschnitt kreissegmentförmig mit seitlichen Abflachungen ausgebildet. Der Radius des Kreissegments ist dem Radius der Bohrung 5 angepasst, um eine hohe Schmiegung der Messelemente an der Bohrungswand 14 zu erreichen. Die Messelemente 12, 13 weisen bevorzugt eine der Leiterplatte 6 zugewandte Flachseite auf, die vorzugsweise parallel zur Leiterplatte 6 ausgerichtet ist. Für eine magnetische Fixierung der Messelemente 12, 13 an der Bohrungswand 14 können die Messelemente 12, 13 beispielsweise aus einem nicht magnetischen Werkstoff, beispielsweise aus Aluminium oder Bronze hergestellt sein und jeweils zumindest eine Tasche aufweisen, in der ein Permanentmagnet, beispielsweise ein Neodym-Magnet, aufgenommen ist. Alternativ ist auch denkbar, dass die Messelemente 12, 13 selbst aus einem permanentmagnetischen Material hergestellt sind.

Den Flachseiten der Messelemente 12, 13 gegenüberliegend ist auf der Leiterplatte eine Messvorrichtung 7 vorgesehen. Die Messvorrichtung 7 bestimmt die Höhe des Messspaltes vorzugsweise berührungslos. Beispielsweise kann die Abstandsmessung kapazitiv oder induktiv erfolgen.

Die vorstehenden Ausführungen zur Ausbildung der Messelemente 12, 13 gelten für die Stützelemente 10, 11 entsprechend. Anstelle einer der Leiterplatte 6 zugewandten Flachseite können die Stützelemente 10, 11 jedoch auch eine Auskehlung auf Seiten der Leiterplatte 6 aufweisen (vgl. Fig. 2B) und nur randseitig mit der Leiterplatte 6 verbunden sein. Dadurch kann zusätzlicher Bauraum für elektronische Komponenten auf der Leiterplatte 6 geschaffen werden.

Wie in Fig. 1A und 1B dargestellt, ist die Leiterplatte 6 mit der Messvorrichtung 7, den Stützelementen 10, 11 und den Messelementen 12, 13 von einem in der Bohrung 5 angeordneten starren Gehäuse 16 aufgenommen. Für den Kontakt der Stützelemente 10, 11 und der Messelemente 12, 13 mit der Bohrungswand 14 sind in dem Gehäuse 16 Öffnungen 17, 18 vorgesehen, durch die die Stützelemente 10, 11 und die Messelemente 12, 13 aus dem Gehäuse 16 hervortreten können.

Die Leiterplatte 6 ist in dem Gehäuse 16 schwimmend gelagert.

Wie aus Fig. 1A bis 2B ersichtlich, kann das Gehäuse 16 stirnseitig mit einem scheibenförmigen Abschlusselement 21 verbunden sein. Das scheibenförmige Abschlusselement kann zweiteilig mit einer zentralen Verschlussplatte 31 ausgebildet sein. Bevorzugt ist das scheibenförmige Abschlusselement 21 als ein Generatorpolschuh ausgebildet. Dafür kann das scheibenförmige Abschlusselement 21 außenseitig des Wälzkörpers 1 eine Mehrzahl von auf einer Kreisbahn verteilt angeordneten Spulenaufnahmen 30 aufweisen.

Wie insbesondere in **Fig. 2A und 2B** zu erkennen, bildet das Gehäuse 16 mit dem Abschlusselement 21, der im Gehäuse 16 aufgenommenen Leiterplatte 6 mit Messvorrichtung 7, den Stützelementen 10, 11 und den Messelementen 12, 13 ein Messmodul welches getrennt von dem Grundkörper des Wälzkörpers 1 gefertigt werden kann und auf einfache Weise in dessen Bohrung 5 montiert werden kann. Die Elektronik des Messmoduls ist vor und während der Montage durch das Gehäuse 16 geschützt.

Zur Montage wird das Gehäuse 16 mit den darin aufgenommenen Komponenten, insbesondere der Leiterplatte 16, den Stützelemente 10, 11 und den Messelemente 12, 13, von der Stirnseite 3 aus in die Bohrung des Wälzkörpers 1 eingeschoben, bis das Abschlusselement 21 mit der Stirnseite 3 in Kontakt steht. Zum Ausgleich von Längentoleranzen kann vorgesehen sein, dass das Abschlusselement 21 auf ein Gewinde 23 des Gehäuses 16 aufgeschraubt ist. Zur Justierung der Axialposition des Gehäuses 16 kann das Abschlusselement 21 dann gegenüber dem Gehäuse 16 noch verdreht werden. Nach Einstellung der Axialposition kann der das Abschlusselement 21 zur Verdrehsicherung mit der Stirnseite 3 formschlüssig und/oder stoffschlüssig verbunden werden. Hierzu können beispielsweise Stifte in die Verstiftungslöcher 24, 25 eingesetzt werden und/oder die Stirnseite 3 mit dem Abschlusselement 21 verklebt werden. Die Stirnseite 3 kann mit einer Ausnehmung zur Aufnahme des Abschlusselements 21 ausgebildet sein, derart, dass ein radial äußerer Bereich der Stirnseite bündig mit dem Abschlusselement 21 abschließt.

An der anderen Stirnseite 4 wird ein Deckel 22 als Verschluss für das Gehäuse 16 aufgesetzt. Der Deckel 22 wird durch Schrauben 26 mit dem Gehäuse 16 verschraubt. Durch die stirnseitige Verschraubung mit dem Deckel 22 wird das Gehäuse 16 axial in der Bohrung 5 verspannt.

Zur Abdichtung der Stirnseiten 3, 4 gegenüber dem Abschlusselement 21 und dem Deckel 22 können axial wirkende Dichtungselemente 28, 29 vorgesehen sein.

Wie in Fig. 2A zu erkennen, sind die Öffnungen 17, 18 der äußeren Form der Stützelemente 10, 11 und der Messelemente 12, 13 bevorzugt derart angepasst, dass diese nur mit einem geringfügigen axialen Spiel, beispielsweise von 0,5 mm bis 1,5 mm, in den Öffnungen 17, 18 aufgenommen sind.

Bevorzugt ist die Leiterplatte 6 in dem starren Gehäuse 16 in Richtung der Mittelachse A um eine Weglänge verschiebbar angeordnet, die größer ist als das axiale Spiel der Stützelemente 10, 11 und/oder der Messelemente 12, 13 in der jeweils zugeordneten Öffnung 17, 18. Beim Einschieben des Gehäuses 16 in die Bohrung 5 ziehen die magnetischen Stützelemente 10, 11 und Messelemente 12, 13 an die Bohrungswand 14 an. Für ein weiteres Einschieben der Stütz- und Messelemente in die Bohrung 5 muss die durch die magnetische Anziehungskraft verursachte Reibung mit der Bohrungswand 14 überwunden werden. Die hierfür benötigten Axialkräfte können bevorzugt durch das starre Gehäuse 16 direkt auf die Stütz- und Messelemente übertragen werden. Wenn die Leiterplatte 6 im Gehäuse 16 um eine axiale Weglänge verschiebbar ist, die das axiale Spiel der Stütz- und/oder Messelemente in den Öffnungen 17, 18 übersteigt, können mechanische Belastungen der Leiterplatte 6 beim Einschieben in die Bohrung 5 vermieden werden.

Wie in Fig. 2B und 3 dargestellt, weist das Gehäuse 16 bevorzugt innenseitig sich gegenüberliegende Führungsnuten 19, 20 auf, in die die Leiterplatte 6 in axialer Richtung eingeschoben ist. Die Führungsnuten 19, 20 weisen dabei eine Nutbreite B auf, die die Höhe H der Leiterplatte 6 unter Ausbildung eines Spiels übersteigt. Durch die seitliche Führung der Nuten 19, 20 ist die Leiterplatte 6 in ihrer Winkelausrichtung im Gehäuse 16 eingeschränkt.

Das Spiel in den Nuten 19, 20 in einer zur Leiterplatte 6 senkrechten Richtung ermöglicht zugleich die schwimmende Lagerung der Leiterplatte 6 im Gehäuse. Damit können die Vorteile einer Führung mit einer Entkopplung der Position der Leiterplatte 6 gegenüber Eigenbewegungen des Gehäuses 16 kombiniert verwirklicht werden. Das Spiel der Leiterplatte 6 in den Führungsnuten 19, 20 beträgt bevorzugt zwischen 0,1 mm und 2 mm.

Wie insbesondere in **Fig. 3** erkennbar, hat das Gehäuse 16 vorzugsweise die Grundform einer allgemein zylindrischen Hülse und die Öffnungen 17, 18 zur Aufnahme der Stützelemente 10, 11 und der Messelemente 12, 13 sind durch fensterartige Ausschnitte gebildet. Die Öffnungen 17, 18 für die Stützelemente 10, 11 und das dem jeweiligen Stützelement 10, 11 zugeordnete Messelement 12; 13 sind bevorzugt sich axial gegenüberliegend in dem Gehäuse 16 angeordnet.

Wie ebenfalls in Fig. 3 erkennbar, nehmen die Öffnungen 17, 18 bevorzugt einen Zentrumswinkel von jeweils mindestens 90°, besonders bevorzugt von mindestens 120° in Umfangsrichtung des Gehäuses 16 ein.

Der Wälzkörper 1 ist üblicherweise aus Stahl gefertigt. Das Gehäuse 16 kann ebenfalls aus Stahl gefertigt sein. Es können aber auch andere metallische, insbesondere nicht magnetische Werkstoffe zum Einsatz kommen. Da das Gehäuse während des Betriebs keinen größeren Belastungen ausgesetzt ist, können auch Kunststoffe verwendet werden.

**Fig. 4** zeigt ein Gehäuse 16 gemäß einem zweiten Ausführungsbeispiel der Erfindung. Das Gehäuse 16 unterscheidet sich von dem in Fig. 3 gezeigten Gehäuse dadurch, dass jeweils drei Öffnungen 17, 18 für Stütz- und Messelemente vorgesehen sind. Durch die Erhöhung der Anzahl der Messelemente kann die axiale Verteilung der auf den Wälzkörper 1 wirkenden Belastung genauer bestimmt werden.

Ferner weist das Gehäuse 16 außenseitig im Umfangsbereich der Öffnungen 16, 17 seitliche Abflachungen 34 auf. Durch die Abflachungen 34 wird im montierten Zustand Platz für die

Einführung einer Fühlerlehre zwischen Bohrung und Gehäuse 16 geschaffen, mit der die korrekte axiale Positionierung und das Spiel der Stütz- und Messelemente in der Bohrung überprüft werden kann. Auch kann eine Montagelehre während der Montage zusammen mit dem Gehäuse 16 in die Bohrung eingeführt werden, um einen direkten Kontakt der Stütz- und Messelemente mit der Bohrungswand während des Einschiebens zu verhindern. Auf diese Weise kann die Montage bei Unebenheiten oder Absätzen in der Bohrungswand vereinfacht werden.

Im Übrigen gelten die vorstehenden Ausführungen zum ersten Ausführungsbeispiel für das zweite Ausführungsbeispiel gemäß Fig. 4 entsprechend.

### Bezugszeichenliste

- 1: Wälzkörper
- 2: Außenmantel
- 4: Stirnseiten
- 3, 5: Bohrung
- 6: Leiterplatte
- 7: Messvorrichtung
- 8: erste Seite der Leiterplatte
- 9: zweite Seite der Leiterplatte
- 10, 11: Stützelemente
- 12, 13: Messelemente
- 14: Bohrungswand
- 15: Messspalt
- 16: Gehäuse
- 17, 18: Öffnungen
- 19, 20: Führungsnuten
- 21: Abschlusselement
- 22: Deckel
- 23: Gewinde
- 24, 25: Verstiftungslöcher
- 26: Schrauben
- 27: Gewindebohrung
- 28, 29: Dichtungselement
- 30: Spulenaufnahme
- 31: Verschlussplatte
- 32, 33: Führungsflächen

- A: Mittelachse
- H: Höhe der Leiterplatte
- B: Nutbreite

## Patentansprüche

1. Wälzkörper zur Verwendung in einem Wälzlager mit einer Mittelachse (A), einem zu der Mittelachse (A) rotationssymmetrischen Außenmantel (2), zwei Stirnseiten (3, 4) und einer die beiden Stirnseiten (3, 4) verbindenden, sich entlang der Mittelachse (A) erstreckenden Bohrung (5), in der eine Leiterplatte (6) mit einer Messvorrichtung (7) zur Messung einer Verformung der Bohrung (5) aufgenommen ist, wobei die Leiterplatte (6) von mindestens einem auf einer ersten Seite (8) der Leiterplatte (6) befestigten Stützelement (10, 11) getragen ist, das mit der Bohrungswand (14) in Kontakt steht, und auf einer gegenüberliegenden zweiten Seite (9) der Leiterplatte (6) mindestens ein Messelement (12, 13) vorgesehen ist, das ebenfalls mit der Bohrungswand (14) in Kontakt steht und einen Messspalt (15) zwischen dem Messelement (12, 13) und der Leiterplatte (6) erzeugt, dessen Höhe ein Maß für die Verformung der Bohrung (5) bildet, **dadurch gekennzeichnet, dass** die Leiterplatte (6) mit der Messvorrichtung (7), das mindestens eine Stützelement (10, 11) und das mindestens eine Messelement (12, 13) von einem in der Bohrung (5) angeordneten starren Gehäuse (16) aufgenommen sind, wobei das mindestens eine Stützelement (10, 11) und das mindestens eine Messelement (12, 13) durch Öffnungen (17, 18) in dem Gehäuse (16) mit der Bohrungswand (14) in Kontakt stehen und die Leiterplatte (6) in dem Gehäuse (16) schwimmend gelagert ist.

2. Wälzkörper nach Anspruch 1, **dadurch gekennzeichnet, dass** das Gehäuse (16) innenseitig sich gegenüberliegende Führungsnuten (19, 20) aufweist, in die die Leiterplatte (6) in axialer Richtung eingeschoben ist, wobei die Führungsnuten (19, 20) eine Nutbreite (B) aufweisen, die die Höhe (H) der Leiterplatte (6) unter Ausbildung eines Spiels übersteigt.

3. Wälzkörper nach Anspruch 2, **dadurch gekennzeichnet, dass** das Spiel der Leiterplatte (6) in den Führungsnuten (19, 20) zwischen 0,1 mm und 2 mm beträgt.

4. Wälzkörper nach einem der Ansprüche 1 bis 3, **dadurch gekennzeichnet, dass** das Gehäuse (16) die Grundform einer allgemein zylindrischen Hülse aufweist und die Öffnungen (17, 18) zur Aufnahme des mindestens einen Stützelements (10, 11) und des mindestens einen Messelements (12, 13) durch fensterartige Ausschnitte gebildet sind.

5. Wälzkörper nach einem der Ansprüche 1 bis 4, **dadurch gekennzeichnet, dass** das mindestens eine Stützelement (10, 11) und das mindestens eine Messelement (12, 13) mit der Bohrungswand aufgrund von magnetischer Wechselwirkung in Kontakt steht.

6. Wälzkörper nach Anspruch 5, **dadurch gekennzeichnet, dass** die Stützelemente (10, 11) und/oder die Messelemente (12, 13) einen Permanentmagneten umfassen.

7. Wälzkörper nach einem der Ansprüche 1 bis 6, **dadurch gekennzeichnet, dass** die Öffnungen (17, 18) für das mindestens eine Stützelement (10; 11) und ein diesem Stützelement (10; 11) zugeordneten Messelement (12; 13) in dem Gehäuse (16) sich axial gegenüberliegend angeordnet sind

8. Wälzkörper nach einem der Ansprüche 1 bis 7, **dadurch gekennzeichnet, dass** die Öffnungen (17, 18) einen Zentrumswinkel von jeweils mindestens 90°, bevorzugt mindestens 120° in Umfangsrichtung des Gehäuses (16) einnehmen.

9. Wälzkörper nach einem der Ansprüche 1 bis 8, **dadurch gekennzeichnet, dass** die Leiterplatte (6) in dem starren Gehäuse (16) in Richtung der Mittelachse (A) um eine Weglänge verschiebbar angeordnet ist, die größer ist als ein axiales Spiel des mindestens einen Stützelements (10, 11) und/oder des mindestens einen Messelements (12, 13) in der jeweils zugeordneten Öffnung (17, 18).

10. Wälzkörper nach einem der Ansprüche 1 bis 9, **dadurch gekennzeichnet, dass** das Gehäuse (16) stirnseitig mit einem scheibenförmigen Abschlusselement (21) verbunden ist.

11. Wälzkörper nach Anspruch 10, **dadurch gekennzeichnet, dass** das Abschlusselement (21) zur Verdrehsicherung mit der dem Abschlusselement (21) zugeordneten Stirnseite (3) formschlüssig und/oder stoffschlüssig verbunden ist.

12. Wälzkörper nach einem der Ansprüche 1 bis 11, **dadurch gekennzeichnet, dass** Gehäuse (16) durch stirnseitige Verschraubung mit einem Deckel (22) axial in der Bohrung (5) verspannbar ist.

## Claims

1. Rolling element for use in a rolling bearing having a central axis (A), an outer shell (2) which is rotationally symmetrical with respect to the central axis (A), two end faces (3, 4) and a bore (5) which connects the two end faces (3, 4) and extends along the central axis (A) and in which a printed circuit board (6) with a measuring device (7) for measuring a deformation of the bore (5) is accommodated, the printed circuit board (6) being supported by at least one supporting element (10, 11) which is fastened on a first side (8) of the printed circuit board (6) and is in contact with the bore wall (14), and at least one measuring element (12, 13) being provided on an opposite second side (9) of the printed circuit board (6), which is also in contact with the bore wall (14) and creates a measuring gap (15) between the measuring element (12, 13) and the printed circuit board (6), the height of which gap forms a measure of the deformation of the bore (5), **characterized in that** the printed circuit board (6) with the measuring device (7), the at least one supporting element (10, 11) and the at least one measuring element (12, 13) are accommodated by a rigid housing (16) arranged in the bore (5), wherein the at least one supporting element (10, 11) and the at least one measuring element (12, 13) are in contact with the bore wall (14) through openings (17, 18) in the housing (16) and the printed circuit board (6) is floatingly mounted in the housing (16).

2. Rolling element according to claim 1, **characterized in that** the housing (16) has guide grooves (19, 20) opposite one another on the inside, into which the printed circuit board (6) is inserted in the axial direction, the guide grooves (19, 20) having a groove width (B) which exceeds the height (H) of the printed circuit board (6), forming a clearance.

3. Rolling element according to claim 2, **characterized in that** the clearance of the printed circuit board (6) in the guide grooves (19, 20) is between 0.1 mm and 2 mm.

4. Rolling element according to one of claims 1 to 3, **characterized in that** the housing (16) has the basic shape of a generally cylindrical sleeve and the openings (17, 18) for receiving the at least one supporting element (10, 11) and the at least one measuring element (12, 13) are formed by window-like cutouts.

5. Rolling element according to one of claims 1 to 4, **characterized in that** the at least one supporting element (10, 11) and the at least one measuring element (12, 13) are in contact with the bore wall due to magnetic interaction.

6. Rolling element according to claim 5, **characterized in that** the supporting elements (10, 11) and/or the measuring elements (12, 13) comprise a permanent magnet.

7. Rolling element according to one of claims 1 to 6, **characterized in that** the openings (17, 18) for the at least one supporting element (10; 11) and a measuring element (12; 13) associated with this supporting element (10; 11) are arranged axially opposite one another in the housing (16).

8. Rolling element according to one of claims 1 to 7, **characterized in that** the openings (17, 18) each have a center angle of at least 90°, preferably at least 120° in the circumferential direction of the housing (16).

9. Rolling element according to one of claims 1 to 8, **characterized in that** the printed circuit board (6) is arranged in the rigid housing (16) so as to be displaceable in the direction of the central axis (A) by a path length which is greater than an axial play of the at least one supporting element (10, 11) and/or of the at least one measuring element (12, 13) in the respectively associated opening (17, 18).

10. Rolling element according to one of claims 1 to 9, **characterized in that** the housing (16) is connected at the end face to a disc-shaped end element (21).

11. Rolling element according to claim 10, **characterized in that** the end element (21) is connected to the end face (3) associated with the end element (21) in a form-fitting and/or material-bonded manner to prevent rotation.

12. Rolling element according to one of claims 1 to 11, **characterized in that** the housing (16) can be braced axially in the bore (5) by screwing it to a cover (22) on the end face.

## Revendications

1. Elément roulant destiné à être utilisé dans un palier à roulement avec un axe central (A), une enveloppe extérieure (2) à symétrie de rotation par rapport à l'axe central (A), deux faces frontales (3, 4) et un alésage (5) reliant les deux faces frontales (3, 4) et s'étendant le long de l'axe central (A), dans lequel est logée une carte à circuits imprimés (6) avec un dispositif de mesure (7) pour mesurer une déformation de l'alésage (5), la carte de circuit imprimé (6) étant portée par au moins un élément de support (10, 11) fixé sur une première face (8) de la carte de circuit imprimé (6) et en contact avec la paroi (14) de l'alésage, et au moins un élément de mesure (12, 13) étant prévu sur une deuxième face (9) opposée de la carte de circuit imprimé (6), qui est également en contact avec la paroi de l'alésage (14) et qui produit une fente de mesure (15) entre l'élément de mesure (12, 13) et la carte de circuit imprimé (6), dont la hauteur constitue une mesure pour la déformation de l'alésage (5), **caractérisé en ce que** la carte de circuit imprimé (6) avec le dispositif de mesure (7), le au moins un élément de support (10, 11) et le au moins un élément de mesure (12, 13) sont reçus par un boîtier rigide (16) disposé dans l'alésage (5), le au moins un élément de support (10, 11) et le au moins un élément de mesure (12, 13) étant en contact avec la paroi de l'alésage (14) par des ouvertures (17, 18) dans le boîtier (16) et la carte à circuits imprimés (6) étant montée de manière flottante dans le boîtier (16).

2. Elément roulant selon la revendication 1, **caractérisé en ce que** le boîtier (16) présente sur le côté intérieur des rainures de guidage (19, 20) opposées l'une à l'autre, dans lesquelles la carte imprimée (6) est insérée dans la direction axiale, les rainures de guidage (19, 20) présentant une largeur de rainure (B) qui dépasse la hauteur (H) de la carte imprimée (6) en formant un jeu.

3. Elément roulant selon la revendication 2, **caractérisé en ce que** le jeu du circuit imprimé (6) dans les rainures de guidage (19, 20) est compris entre 0,1 mm et 2 mm.

4. Elément roulant selon l'une des revendications 1 à 3, **caractérisé en ce que** le boîtier (16) présente la forme de base d'un manchon généralement cylindrique et **en ce que** les ouvertures (17, 18) destinées à recevoir l'au moins un élément de support (10, 11) et l'au moins un élément de mesure (12, 13) sont formées par des découpes en forme de fenêtre.

5. Elément roulant selon l'une des revendications 1 à 4, **caractérisé en ce que** ledit au moins un élément de support (10, 11) et ledit au moins un élément de mesure (12, 13) sont en contact avec la paroi de l'alésage en raison d'une interaction magnétique.

6. Elément roulant selon la revendication 5, **caractérisé en ce que** les éléments de support (10, 11) et/ou les éléments de mesure (12, 13) comprennent un aimant permanent.

7. Elément de roulement selon l'une des revendications 1 à 6, **caractérisé en ce que** les ouvertures (17, 18) pour le au moins un élément de support (10 ; 11) et un élément de mesure (12 ; 13) associé à cet élément de support (10 ; 11) sont disposées dans le boîtier (16) de manière à se faire face axialement.

8. Elément roulant selon l'une des revendications 1 à 7, **caractérisé en ce que** les ouvertures (17, 18) forment chacune un angle au centre d'au moins 90°, de préférence d'au moins 120°, dans la direction circonférentielle du boîtier (16).

9. Elément roulant selon l'une des revendications 1 à 8, **caractérisé en ce que** la carte de circuit imprimé (6) est disposée dans le boîtier rigide (16) de manière à pouvoir être déplacée dans la direction de l'axe central (A) sur une longueur de course qui est supérieure à un jeu axial du au moins un élément de support (10, 11) et/ou du au moins un élément de mesure (12, 13) dans l'ouverture (17, 18) respectivement associée.

10. Elément roulant selon l'une des revendications 1 à 9, **caractérisé en ce que** le boîtier (16) est relié frontalement à un élément d'extrémité (21) en forme de disque.

11. Elément roulant selon la revendication 10, **caractérisé en ce que** l'élément d'extrémité (21) est relié par complémentarité de forme et/ou de matière à la face frontale (3) associée à l'élément d'extrémité (21) pour empêcher la rotation.

12. Elément roulant selon l'une des revendications 1 à 11, **caractérisé en ce que** le boîtier (16) peut être serré axialement dans l'alésage (5) par vissage frontal avec un couvercle (22).
